Europäisches Patentamt

**European Patent Office**

Office européen des brevets

(11) Veröffentlichungsnummer: **0 056 867**
A2

(12) **EUROPÄISCHE PATENTANMELDUNG**

(21) Anmeldenummer: 81110723.4

(22) Anmeldetag: 23.12.81

(51) Int. Cl.³: **C 09 B 7/10**

(30) Priorität: 22.01.81 DE 3101883

(43) Veröffentlichungstag der Anmeldung:
04.08.82 Patentblatt 82/31

(84) Benannte Vertragsstaaten:
CH DE FR GB IT LI

(71) Anmelder: BASF Aktiengesellschaft
Carl-Bosch-Strasse 38
D-6700 Ludwigshafen(DE)

(72) Erfinder: Hoch, Helmut, Dr.
Waldstrasse 6
D-6706 Wachenheim(DE)

(72) Erfinder: Hiller, Heinrich, Dr.
Theodor-Heuss-Strasse 11
D-6706 Wachenheim(DE)

(54) Verfahren zur Herstellung von 4,4',7,7'-Tetrachlorthioindigo.

(57) Herstellung von 4,4',7,7'-Tetrachlorthioindigo durch Oxidation von 3-Hydroxy-4,7-dichlorthionaphthen mit Salzen von aromatischen Nitrosulfonsäuren in wäßrig-alkalischem Medium bei 40 bis 100°C. Die Oxidation erfolgt rasch bei hoher Raum-Zeit-Ausbeute. Das Verfahren liefert sehr reinen Tetrachlorthioindigo.

EP 0 056 867 A2

BASF Aktiengesellschaft                    O.Z. 0050/034884

Verfahren zur Herstellung von 4,4',7,7'-Tetrachlor-
thioindigo

Die Erfindung betrifft ein Verfahren zur Herstellung von
4,4',7,7'-Tetrachlorthioindigo.

4,4',7,7'-Tetrachlorthioindigo, im folgenden als Tetrachlorthioindigo bezeichnet, ist wegen seines hohen Echtheitsniveaus ein wertvoller Farbstoff für das Färben von
Lacken und Kunststoffen.

Für Thioindigo und dessen Chlorderivate sind eine Reihe
von Herstellverfahren bekannt. Die Herstellung erfolgt
in der Regel durch Oxidation der entsprechenden
3-Hydroxythionaphthene. Nach der DE-PS 241 910 wird durch
Ringschluß von 2,5-Dichlorphenylthioglykolsäure in
Chlorsulfonsäure ein Gemisch aus 3-Hydroxy-4,7-dichlorthionaphthen und Tetrachlorthioindigo erhalten. Reines
3-Hydroxy-4,7-dichlorthionaphthen erhält man durch Ringschluß von 2,5-Dichlorphenylthioglykolsäurechlorid mit
Aluminiumchlorid (DE-PS 197 162), mit Aluminiumchlorid
in organischen inerten Lösungsmitteln (US-PS 21 58 032)
oder mit einem Gemisch aus Aluminiumhalogenid, Alkalimetallhalogenid und Schwefeldioxid (DE-OS 28 25 313).

Die Oxidation des 3-Hydroxy-4,7-dichlorthionaphthens,
im folgenden auch als Hydroxy-dichlorthionaphthen bezeichnet, kann nach der US-PS 21 58 032 mit Natriumpolysulfid, nach der DE-PS 194 237 mit Luft, Eisen-III-chlorid,
Kaliumcyanoferrat-III oder Kaliumdichromat oder nach
DE-OS 25 04 935 mit Peroxidisulfat in wäßrig-alkalischer
Suspension durchgeführt werden.

Nach der DE-PS 241 910 kann Tetrachlorthioindigo ohne
Isolierung des Hydroxy-dichlorthionaphthens direkt aus

Noe/P

2,5-Dichlorphenylthioglykolsäure in Chlorsulfonsäure bei 35°C erhalten werden. Nach den Angaben in der DE-OS 28 25 313, Seite 1, Zeilen 10/13 ist der so erhaltene Tetrachlorthioindigo wegen des Gehalts an Nebenprodukten nur begrenzt verwendbar und z.B. als Lackpigment nicht geeignet.

Aus der DE-OS 24 57 703 ist die direkte Herstellung einer Pigmentform des Tetrachlorthioindigos durch Oxidation von Hydroxydichlorthionaphthen mit Sauerstoff in alkalisch-wäßriger oder alkalisch-wäßrig-organischer Suspension bekannt. Bei der Nacharbeitung wurde nach diesem Verfahren ein Pigment erhalten, das trübe und farbschwache Färbungen lieferte.

Viele der bekannten Verfahren sind nicht wirtschaftlich und bzw. oder aus ökologischen Gründen bedenklich. So gibt z.B. die in der US-PS 21 58 032 beschriebene Oxidation von Hydroxydichlorthionaphthen mit Natriumpolysulfid nach den Angaben in der DE-AS 25 04 935, Spalte 1, Zeilen 33/37 unbefriedigende Ausbeuten.

Außerdem fällt ein Abwasser an, das große Mengen an Schwefelverbindungen enthält und deshalb besonders behandelt werden muß.

Bei der Oxidation von Hydroxydichlorthionaphthen mit Eisen-III-chlorid, Hexacyanoferrat-III oder Kaliumdichromat entsteht schwermetallhaltiger Tetrachlorthioindigo, der in einem zusätzlichen Schritt von Schwermetallverbindungen gereinigt werden muß.

Im Falle der Oxidation von Hydroxy-dichlorthionaphthen mit Luft nach der DE-PS 194 237 muß in hoher Verdünnung gearbeitet werden. Nach den Angaben in der DE-AS 25 04 935, Spalte 1, Zeilen 40/43 erhält man nach diesem Verfahren nur eine niedrige Ausbeute. Durch Zusatz von Kupfer- oder anderen Schwermetallsalzen (DE-OS 24 57 703) wird zwar die Ausbeute bei der Luftoxidation deutlich verbessert, erreicht jedoch im Falle des Hydroxy-dichlorthionaphthens nur 76 bis 78 % der theoretisch möglichen Ausbeute. Diese ist damit deutlich geringer als die mit Kaliumdichromat oder Kaliumpermanganat erzielbaren Ausbeuten. Auch in diesem Falle ist ein zusätzlicher Schritt zur Abtrennung der Schwermetalle erforderlich.

Nach den Angaben in der DE-AS 25 04 935, Spalte 2, Zeilen 12/16 führt auch die Oxidation mit Wasserstoffperoxid, Natriumperoxid und Perborat zu deutlich geringeren Ausbeuten, was bei der Nacharbeitung bestätigt wurde.

Die Oxidation des Hydroxy-dichlorthionaphthens mit Peroxidisulfat liefert nach den Angaben in der DE-AS 25 04 935, Spalte 1, Zeilen 52/58 Tetrachlorthioindigo in 87- bis 91 %iger Ausbeute, jedoch liefert das so erhaltene Rohpigment beim Finish nur Pigmentformen, die blaustichig trübe Färbungen liefern. Dieser Befund deutet darauf hin, daß bei der Oxidation mit Peroxidisulfat Nebenprodukte gebildet werden, welche die starke Farbtonverschiebung und das Abtrüben bewirken.

Aufgabe der vorliegenden Erfindung war es, ein Verfahren zur Herstellung von 4,4',7,7'-Tetrachlorthioindigo zu entwickeln, das die Nachteile der Verfahren des Standes der Technik nicht aufweist und nach dem direkt ein reiner Tetrachlorthioindigo erhalten wird.

Es wurde gefunden, daß man 4,4',7,7'-Tetrachlorthioindigo durch Oxidation von 3-Hydroxy-4,7-dichlorthionaphthen in

wäßrig-alkalischem Medium in der Wärme erhält, wenn man die Oxidation mit Salzen von aromatischen Nitrosulfonsäuren bei Temperaturen von 40 bis 100°C durchführt.

Nach dem erfindungsgemäßen Verfahren erhält man in rascher Reaktion bei hoher Raum-Zeit-Ausbeute sehr reinen Tetrachlorthioindigo, der nach der Analyse 32,8 % Cl und 15,1 % Schwefel enthält, was den aus der Summenformel $C_{16}H_4Cl_4S_2O_2$ (M, 434) berechneten Gehalten von 32,7 % Cl und 14,8 % S praktisch entspricht.

Dieses Ergebnis war überraschend. Der milde und quantitative Verlauf der Oxidation in der wäßrig-alkalischen Suspension war nicht zu erwarten, da bei den Verfahren des Standes der Technik nur Oxidationsmittel mit hohem Redox-Potential wie Permanganat, Natriumdichromat, Peroxidisulfate oder Sauerstoff in alkalischer Suspension zur Oxidation von 3-Hydroxy-4,7-dichlorthionaphthen angewendet werden.

Das Verfahren wird im allgemeinen so durchgeführt, daß man das 3-Hydroxy-4,7-dichlorthionaphthen in Wasser suspendiert und soviel Alkalimetallhydroxid zugibt, daß die Suspension 0,5 bis 10, vorzugsweise 2 bis 5 Gew.% an Alkalimetallhydroxid enthält. Dann gibt man die aromatische Nitrosulfonsäure z.B. im Form des Alkalimetallsalzes zu und erwärmt unter Rühren auf 40 bis 100, vorzugsweise 50 bis 70°C. Die Oxidation ist beendet, wenn in einer Probe im Dünnschichtchromatogramm keine Ausgangsverbindung mehr enthalten ist. Dies ist in der Regel nach 1 bis 2 Stunden der Fall. Bei der Oxidation tritt im Gegensatz zu der Oxidation mit Luft kein Schäumen auf.

Das Reaktionsgemisch wird in üblicher Weise aufgearbeitet, z.B. durch Filtrieren und Neutralwaschen. Die Ausbeute an Tetrachlorthioindigo ist nahezu quantitativ. Das Verfahrensprodukt enthält keine Reduktionsprodukte der aromatischen Nitrosulfonsäure, da diese gut wasserlöslich sind und aus dem Rohpigment gut auswaschbar sind.

Die Wassermenge beträgt in der Regel das 3- bis 8-fache der Menge an Ausgangsprodukt. Man kann auch mehr Wasser nehmen, jedoch bringt dies keinen Vorteil aber auch keinen Nachteil.

Die Menge an Alkalimetallhydroxid in der Suspension liegt zwischen 0,5 und 10, vorzugsweise zwischen 2 und 5 Gew.%, bezogen auf die Suspension.

Die Menge an aromatischer Nitrosulfonsäure beträgt 10 bis 50 Gew.%, bezogen auf das Ausgangsprodukt 3-Hydroxy--4,7-dichlorthionaphthen oder auf das Gemisch aus Tetrachlorthioindigo und Hydroxydichlorthionaphthen.

Als aromatische Nitrosulfonsäuren kommen Nitrobenzolsulfonsäuren, Nitrophenolsulfonsäuren in Betracht, die gegebenenfalls durch $C_1$- bis $C_4$-Alkyl substituiert sind.

Aus wirtschaftlichen Gründen sind Nitrotoluolsulfonsäure und insbesondere m-Nitrobenzolsulfonsäure als Oxidationsmittel bevorzugt.

Die aromatischen Nitro-sulfonsäuren werden vorteilhafterweise in Form ihrer Alkalimetallsalze angewendet. Wendet man die freien Säuren an, dann wird dem Reaktionsgemisch die entsprechende Menge Alkalimetallhydroxid zugefügt.

Das als Ausgangsstoff verwendete 3-Hydroxy-4,7-dichlorthionaphthen kann nach bekannten Verfahren hergestellt werden, z.B. nach den in der US-PS 2 158 032, der DE-PS 197 162 oder der DE-OS 28 25 313 beschriebenen Verfahren. Weiterhin ist das nach dem Verfahren der DE-PS 241 910 aus 2,5-Dichlorphenylthioglykolsäure erhältliche Gemisch aus 3-Hydroxy-4,7-dichlorthionaphthen und Tetrachlorthioindigo hervorragend als Ausgangsstoff für das erfindungsgemäße Verfahren geeignet.

Der nach dem erfindungsgemäßen Verfahren erhaltene rohe Tetrachlorthioindigo kann als wasserfeuchter Preßkuchen oder nach dem Trocknen nach bekannten Formierungsverfahren in Pigmentformen überführt werden, z.B. durch Mahlen mit Salz (DE-PS 11 37 156); durch Umfällen aus konzentrierter Schwefelsäure oder Chlorsulfonsäure mit anschließender Behandlung mit organischen Lösungsmitteln (DE-PS 11 15 711; DE-OS 25 04 962) durch Kneten mit Schwefelsäure (DE-AS 27 34 951), durch Mahlen mit einer großen Menge Dispergiermittel (BE-PS 591 437) oder durch Mahlen der Leukoverbindung des Tetrachlorthioindigo in wäßrig-alkalischer Suspension in Gegenwart von Dithionit unter Einwirkung von Scherkräften (DE-OS 29 16 400).

Das Verfahren soll durch die folgenden Beispiele weiter erläutert werden. Die im folgenden angegebenen Teile und Prozentangaben beziehen sich auf das Gewicht.

Beispiel 1

22 Teile 3-Hydroxy-4,7-dichlorthionaphthen, erhalten nach Beispiel 2 des US-Patents 2 158 032 unter Einsatz von 2,5-Dichlorphenylthioglykolsäure, werden in 102 Teile Wasser und 11 Teile Natronlauge (50 %ige wäßrige Lösung) eingetragen. Die Suspension wird auf 30°C erhitzt und 11 Teile 3-nitrobenzolsulfonsaures Natrium werden zugegeben. Man heizt weiter auf 60°C und hält 2 Stunden bei dieser Temperatur. Nach dieser Zeit ist durch Dünnschichtchromatographie kein 3-Hydroxy-4,7-dichlorthionaphthen mehr nachweisbar. Die rotviolette Suspension von 4,4',7,7'--Tetrachlorthioindigo wird filtriert und mit Wasser von 50°C neutralgewaschen und bei 80°C im Umluftschrank getrocknet. Man erhält 21 Teile 4,4',7,7'-Tetrachlorthioindigo entsprechend 96 % der Theorie mit einem Chlorgehalt von 32,8 % gefunden (ber. 32,7 %) und einem Schwefelgehalt von 15,1 % gefunden (ber. 14,8 %).

Beispiel 2

22 Teile 3-Hydroxy-4,7-dichlorthionaphthen (erhalten aus 2,5-Dichlorphenylthioglykolsäure nach US-PS 2 158 032, Beispiel 2) werden in 100 Teilen Wasser und 10 Teilen Natronlauge (50 %ige Lösung) suspendiert. Man trägt 8 Teile 3-nitrobenzolsulfonsaures Natrium ein und heizt die Mischung auf 60°C. Nach 2 Stunden Rühren bei 60°C ist dünnschichtchromatographisch kein 3-Hydroxy-4,7-dichlorthionaphthen mehr nachweisbar. Nach Aufarbeitung wie in Beispiel 1, erhält man 20,7 Teile 4,4',7,7'-Tetrachlorthioindigo, entsprechend 94 % der Theorie als rotviolettes Pulver.

Beispiel 3

a) 1050 Teile Chlorsulfonsäure werden auf 0°C abgekühlt. Dann werden 120 Teile 2,5-Dichlorphenylthioglykolsäure in ca. 30 Minuten so eingetragen, daß die Temperatur 5°C nicht überschreitet. Es wird bei 0 bis 5°C gerührt, bis keine 2,5-Dichlorphenylthioglykolsäure mehr dünnschichtchromatographisch nachweisbar ist. Nach 5 Stunden wird das Gemisch unter Rühren auf 25 000 Teile Eis ausgefällt. Das ausgefällte 4,4',7,7'-Tetrachlorthioindigo/3-Hydroxy-4,7-dichlorthionaphthen-Gemisch (Verhältnis ca. 1 : 1) wird durch Filtration isoliert und mit Wasser von 20°C neutralgewaschen.

b) 100 Teile des nach a) erhaltenen Tetrachlorthioindigo/ 3-Hydroxy-4,7-dichlorthionaphthen-Gemisches werden als wäßriger Teig in 300 Teilen Wasser von 20°C suspendiert und 20 Teile Natronlauge (50 %ige wäßrige Lösung) zugegeben. Dann werden 15 Teile 3-nitrobenzolsulfonsaures Natrium zugesetzt und das Gemisch auf 65°C erwärmt. Nach eineinhalb Stunden bei dieser Temperatur ist dünnschichtchromatographisch kein 3-Hydroxy--4,7-dichlorthionaphthen mehr nachweisbar. Die rotviolette Suspension des 4,4',7,7'-Tetrachlorthioindigo wird filtriert und mit Wasser von 50°C neutralgewaschen und bei 80°C im Umluftschrank getrocknet. Man erhält 96 Teile 4,4',7,7'-Tetrachlorthioindigo entsprechend 96 % vom Einsatz (Chlorgehalt gef.: 32,8 %, ber.: 32,7 %; Schwefelgehalt, gef.: 15,3 %, ber.: 14,8 %).

Beispiel 4

a) 850 Teile Chlorsulfonsäure werden auf 0°C abgekühlt. Dann werden 100 Teile 2,5-Dichlorphenylthioglykolsäure so eingetragen, daß die Temperatur durch Kühlung zwischen 0 und 5°C gehalten wird (Dauer ca. eine Stunde) und 5 Stunden bei 0 bis 5°C gerührt. Die Suspension wird danach unter Rühren auf 25 000 Teile Eis ausgefällt. Das gefällte 4,4',7,7'-Tetrachlorthioindigo/ 3-Hydroxy-4,7-dichlorthionaphthen-Gemisch wird durch Filtration isoliert und mit Wasser von 20°C neutralgewaschen.

b) 75 Teile des 4,4',7,7'-Tetrachlorthioindigo/3-Hydroxy--4,7-dichlorthionaphthen-Gemisches aus a) werden mit Wasser zu einem wäßrigen Teig suspendiert (Feststoffgehalt 20 %) und 30 Teile Natronlauge (50 %ige wäßrige Lösung) zugegeben. Nach dem Eintragen von 10 Teilen 3-nitrobenzolsulfonsaurem Natrium wird auf 65°C aufgeheizt und 2 Stunden bei dieser Temperatur gerührt. Nach dieser Zeit ist kein 3-Hydroxy-4,7-dichlorthionaphthen mehr dünnschichtchromatographisch nachzuweisen. Der gebildete 4,4',7,7'-Tetrachlorthioindigo wird durch Filtration isoliert, mit Wasser von 50°C neutralgewaschen und bei 80°C im Umluftschrank getrocknet. Man erhält 73 Teile 4,4',7,7'-Tetrachlorthioindigo entsprechend 97 % vom Einsatz.

Beispiel 5

22 Teile 3-Hydroxy-4,7-dichlorthionaphthen (erhalten aus 2,5-Dichlorphenylthioglykolsäure nach US-PS 2 158 032, Beispiel 2) werden in 90 Teilen Wasser und 10 Teilen Natronlauge (50 %ige Lösung) suspendiert. Man trägt 10 Teile 4-Nitro-2-methyl-benzolsulfonsaures Natrium ein und erwärmt auf 70°C. Nach 1 1/2 stündigem Rühren bei dieser Temperatur ist dünnschichtchromatographisch kein 3-Hydroxy-4,7-dichlorthionaphthen mehr nachweisbar. Nach dem Aufarbeiten wie in Beispiel 1 erhält man 21 Teile 4,4',7,7'-Tetrachlorthioindigo, entsprechend 96 % der Theorie als rotviolettes Pulver.

Patentansprüche

1. Verfahren zur Herstellung von 4,4',7,7'-Tetrachlorthioindigo durch Oxidation von 3-Hydroxy-4,7-dichlorthionaphthen in wäßrig-alkalischem Medium in der Wärme, dadurch gekennzeichnet, daß man die Oxidation mit Salzen von aromatischen Nitrosulfonsäuren bei Temperaturen von 40 bis 100°C durchführt.

2. Verfahren nach Anspruch 1, dadurch gekennzeichnet, daß die Oxidation bei Temperaturen von 50 bis 70°C erfolgt.

3. Verfahren nach Anspruch 1 oder 2, dadurch gekennzeichnet, daß das Reaktionsgemisch 0,5 bis 10 Gew.%, bezogen auf die Suspension, Alkalimetallhydroxid gelöst enthält.

4. Verfahren nach Anspruch 1, 2 oder 3, dadurch gekennzeichnet, daß - bezogen auf 3-Hydroxy-4,7-dichlorthionaphthen - 10 bis 50 Gew.% an aromatischer Nitrosulfonsäure in Form der Alkalimetallsalze angewendet werden.

5. Verfahren gemäß den Ansprüchen 1 bis 4, dadurch gekennzeichnet, daß man als Oxidationsmittel Nitrobenzolsulfonsäuren, Nitrophenolsulfonsäuren, in denen die Phenylreste gegebenenfalls durch $C_1$- bis $C_4$-Alkyl substituiert sind, oder Gemische davon in Form der Alkalimetallsalze verwendet.